# EUROPEAN PATENT SPECIFICATION

(11) **EP 3 750 385 B1**
(45) Date of publication and mention of the grant of the patent: **05.03.2025**
(21) Application number: 19179407.2
(22) Date of filing: 11.06.2019
(51) Int. Cl.: A01B 13/14, A01B 17/00, A01B 61/04, A01B 15/02, A01B 13/08

(54) **PLOUGH SOLE BREAKER**
PFLUGSOHLENBRECHER
BRISEUR DE SEMELLE DE LABOUR

(43) Date of publication of application: 16.12.2020
(60) Divisional application: 25153562.1
(73) Proprietor: Kverneland Group Operations Norway AS, 4353 Klepp Stasjon (NO)
(72) Inventor: Skjønsberg, Simen, 4322 Sandnes (NO); Werner, Dag Arne, 4013 Stavanger (NO); Bryne, Bjørn, 4340 Bryne (NO); Terjesønn Hansen, Truls Olve, 7560 Vikhammer (NO)
(74) Representative: Håmsø Patentbyrå AS

(56) References cited:
- AU-B2- 580 036
- DE-C- 259 165
- US-A- 3 046 917
- US-A- 4 050 521
- US-A- 4 924 946
- US-A- 5 409 068
- US-A1- 2008 314 604

## Description

The present invention relates to a plough sole breaker arranged to be connected to a plough body, extendable below a working depth of the plough body, the plough sole breaker comprising a bracket arranged to be attached to the plough body, a forward portion of the bracket comprising attachment means, and a tine being connected to a rear end portion of the bracket.

For various reasons a soil pan may appear, causing troubles for the cultivation and growth of a crop. The appearance may result from repeated soil preparation to the same depth, causing a so-called plough sole to be created, or from fine-grained material tending to flow with rain water or irrigation water, precipitating below the soil surface, thus creating a hard pan which is difficult to penetrate for plant roots and also leaving the underground inaccessible for the rain water and irrigation water, causing the crop to suffer from draught or flood.

From FR2541847 A1 is known a device for breaking or fragmenting the plough sole. A device is fastened directly to the plough, makes it possible to break the said plough sole in a single operation and simultaneously with the action of the plough. From a plate fastened to the rear part of the ploughshare beam an inwardly curved tooth provided with a small ploughshare or wear plate is projecting underneath the level of the plough share.

US2395342 A discloses tripping mechanism for an earth-working tool such as a cultivator, wherein a tine shank is pivotally attached to a stem about a horizontal pin, the shank being held in a working position by a coiled spring and a shear strip resting against a shoulder on a shank body.

From US2634665A is known a spring-controlled shovel mount for a cultivator, wherein a cultivator shovel is supported on a staff. The shovel is held in position by a trip mechanism allowing the shovel to retract when striking an obstruction. Shovel supports are pivotal connected to the staff and also connected to a spring-loaded link system.

US3049180A discloses a safety trip for a cultivator or the like, wherein a shoe carrying a shovel is pivotal connected to a shank, the shovel and the shove held against tripping by a spring-loaded tripping mechanism.

Patent publication DE259165C discloses a spring-loaded subsoiler wherein the spring pushes sub-surface tines toward an active working position, and where the spring allows the tine to pivot away when it meets a too high resistance, for instance when it hits a stone.

Patent publication US405021A1 discloses a counter-weighted subsoiler. The subsoiler is automatically retracted when the implement is lifted, due to the counter-weight. A drag point on the subsoiler engages the ground when the implement is lowered and thereby activates the subsoiler.

Patent publication US20080314604A1 discloses a moldboard plough having a soil engaging shank that is extendable to a depth of six to eight inches deeper than the reach of the moldboard plough. The moldboard plough comprises a trip mechanism to raise the plough and the soil engaging shank when either or both encounter a hard buried object.

Patent publication US5409068 discloses a sweep blade and a ripper blade attached to a common support. The ripper blade is attached to a ripper shank, which is attached to the common support via a pair of bolts, wherein one of the bolts provides a pivot axis and the other bolt being a shear pin.

Patent publication US4924946 discloses an apparatus for deep ploughing highly compacted soil. A trough is formed by pulling a first det of point ploughs, and a second point plough is used to loosen the remaining soil. A reset mechanism permits the second point plough to raise in the event that it strikes an obstacle.

Patent publication US3046917 A discloses a planter including a plurality of furrow openers comprising shanks, ploughs mounted thereon, and seed drop tubes rearwardly of the furrow openers.

Patent publication AU580036 B2 discloses a stump-jump plough comprising a curved-shank ploughshare journalled in a jump-box for limited pivotal movement in a vertical plane.

A disadvantage with prior art is the lack of allowing the soil-working tool to be moved to a released, raised position when the implement carrying the tool is parked, the tool still being easy to reposition to a working position and remain there unaffected of any release systems.

The invention has for its object to remedy or to reduce at least one of the drawbacks of the prior art, or at least provide a useful alternative to prior art.

The invention is as defined in claim 1. Additional optional features are provided in the dependent claims.

In the following is described an example of a preferred embodiment illustrated in the accompanying drawings, wherein:
- Fig. 1: shows a perspective view of a first example of a plough body provided with a plough sole breaker in a working position;
- Fig. 2: shows an enlarged side view of the first example of the plough sole breaker in a working position;
- Fig. 3: shows a side view of the first example of the plough sole breaker in an idle state;
- Fig. 4: shows a side view of an embodiment of the plough sole breaker according to the invention in a working position;
- Fig. 5: shows a side view of the embodiment of the plough sole breaker in a first idle state position;
- Fig. 6: shows an enlarged axial section VI-VI according to figure 4; and
- Fig. 7: shows a side view of the embodiment of the plough sole breaker in a second idle state position.

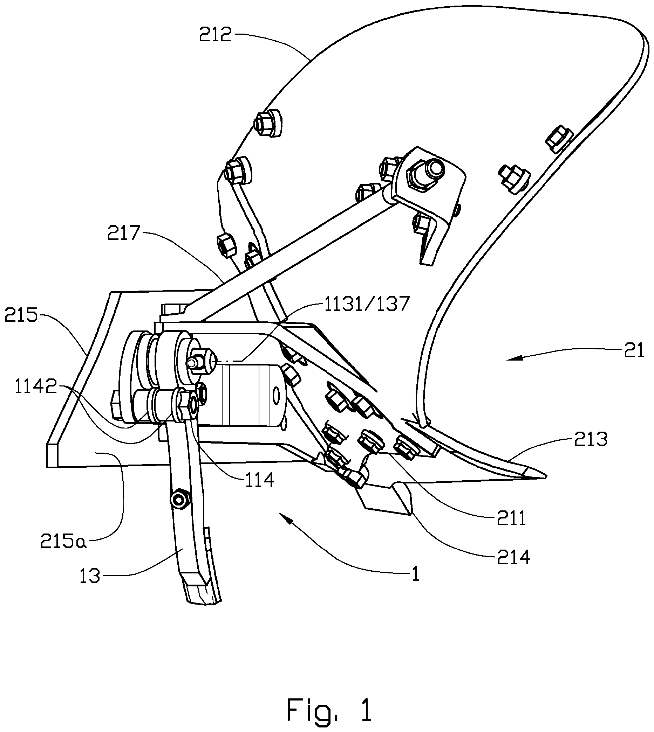

In figure 1 a plough body 21 of a plough (not shown) is depicted with a plough sole breaker 1 attached at an inner face 215a of a land side 215 of the plough body 21, more exactly to a plough body saddle 211 onto which is also attached a mouldboard 212 and a share 213 with a wearing point 214 forming a forward edge of the plough body 21. The plough body 21 is attached to an end portion of a beam leg (not shown), and a mouldboard stay 217 is forming a connection between a rear portion of the mouldboard 212 and the saddle 211.

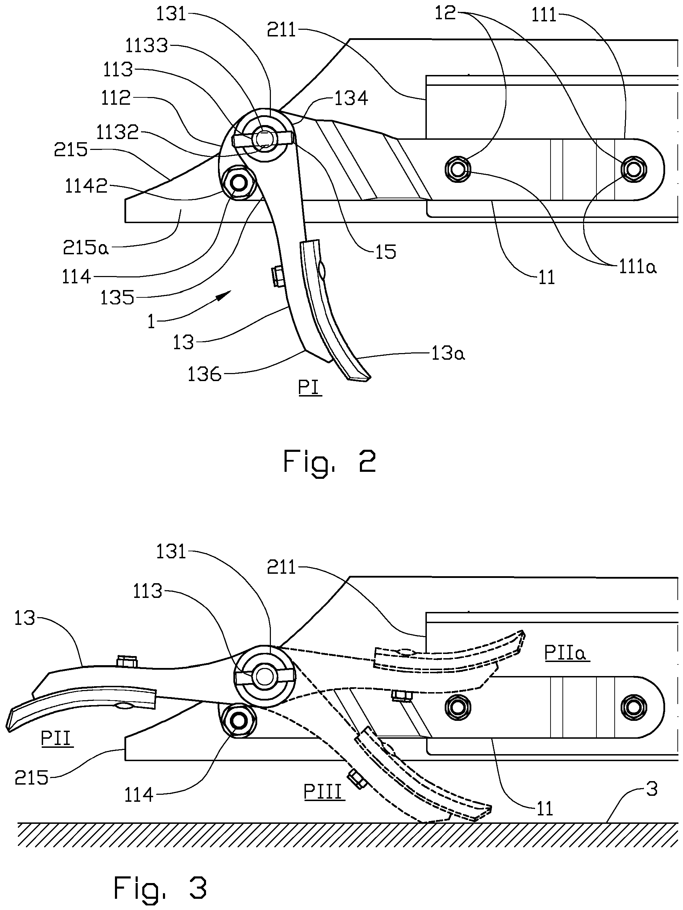

It is now referred to figures 2 and 3 for further details of the first example of the plough sole breaker 1. A bracket 11 is provided with a forward end portion 111 and a rear end portion 112. The forward end portion 111 is provided with several through-holes 111a corresponding with holes (not shown) in a rear portion of the saddle 211 and in the land side 215 and arranged for receiving attachment means 12, preferably screws which are countersunk in the land side 215, thus leaving an outer side face of the land side 215 smooth and plane with no elements extending from said side face.

The rear bracket portion 112 is provided with a shaft 113 arranged approximately perpendicular to the land side 215 and extending away from the second, inner land side face 215b.

A tine 13 is provided with an exchangeable wearing part 13a releasably attached to a second tine end portion 136. An angle of attack of the wearing part 13a may also be adjustable, and the wearing part 1a may be displaceable in its longitudinal direction and possibly reversable to maintain its functionality when worn.

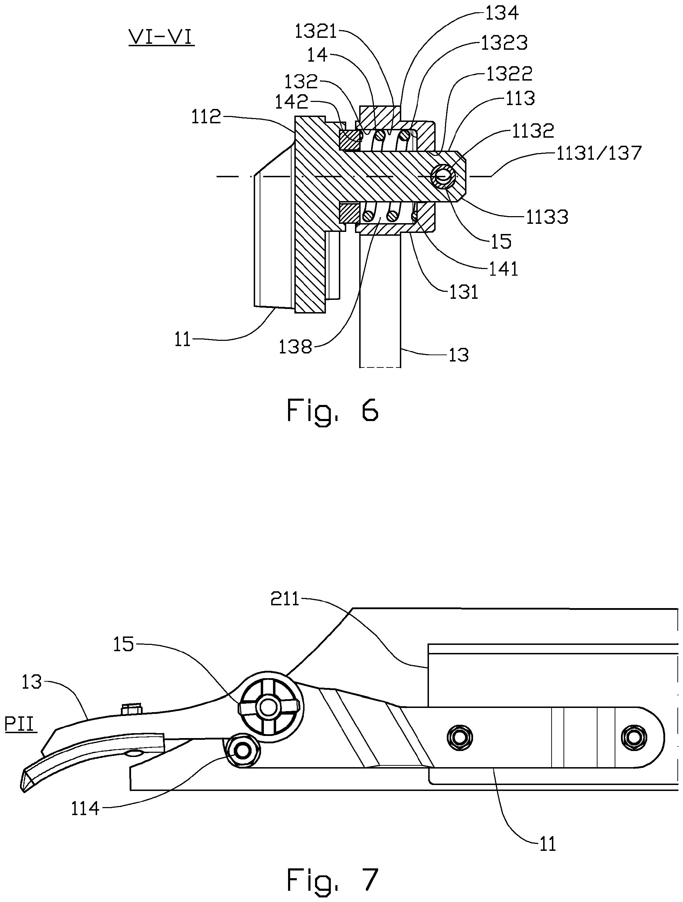

A first end portion 134 of the tine 13 remote the wearing part 13a is provided with a hub 131 arranged to bear smoothly on the shaft 113, the tine 13 extending perpendicularly from the shaft 113. A pivot axis 137 of the tine 13 is co-centric with a centre axis 1131 of the shaft 113 (see figures 1 and 6).

An end portion 1133 of the shaft 113 extending from an end portion 1133 of the tine hub 131 is provided with a radial through bore 1132 arranged to receive a locking means 15 extending from at least one end of the through bore 1132, thus securing the tine 13 on the bracket 11 in an axial direction of the shaft 113. The locking means 15 is preferably a ring pin, a split pin or a tension pin.

When arranged in a working state, an intermediate portion 135 of the tine 13 is resting against a forward face of a tine support 114, the tine support 114 here shown as a bolt extending from the rear bracket end portion 112 approximately parallel to and spaced apart from the shaft 113. The portion of the support 114 contacting the tine 13 may be U-shaped, providing even lateral support to the tine 13 by side wings 1142, in the embodiment shown as washers defining a collar (see even figure 1).

When the tine support 114 is a bolt, the rear bracket end portion 112 may be arranged with several bolt holes providing alternative positions of the tine support 114, thus allowing the angle of attach of the tine 13 to be changed.

If space allows the tine to pivot to a position PII shown in figure 3, a top face of the support 114 may support the tine 13 when in an idle state. Alternatively, the tine 13 is supported inside the saddle 211 when in an idle state according to position Plla of figure 3, particularly when fitted to a reversible plough.

When the tine support 114 is a bolt extending from the rear bracket end portion 112, said bolt may be a shear bolt also providing overload protection, allowing the tine 13 to pivot backwards when the shear bolt breaks.

In its working state position PI, the tine 13 resting against the support 114, the tine 13 is preferably slanting in the working direction of the plough body 21, e.g. the free end of the tine 13 pointing in the direction of the share 213 of the plough 2, as shown in figure 2.

The disclosed first example of the plough sole breaker 1 allows the plough with one or more plough bodies 21 to be lowered onto a parking site 3 without the need of firstly tilting the tines 13 from their working state positions PI (see figure 2) to an intermediate state position PIII like the one shown in figure 3 by slightly reversing and simultaneously lowering the plough to the ground, the coordinated shifting of the plough causing the tines 13 to be pivoted in a forward direction about the shafts 113 as the free ends of the tines 13 touches the ground.

For the purpose of ploughing without engaging the plough sole breakers 1, the tines 13 are tilted and parked in their idle state positions as shown in figure 3, resting against the top face of the support 114.

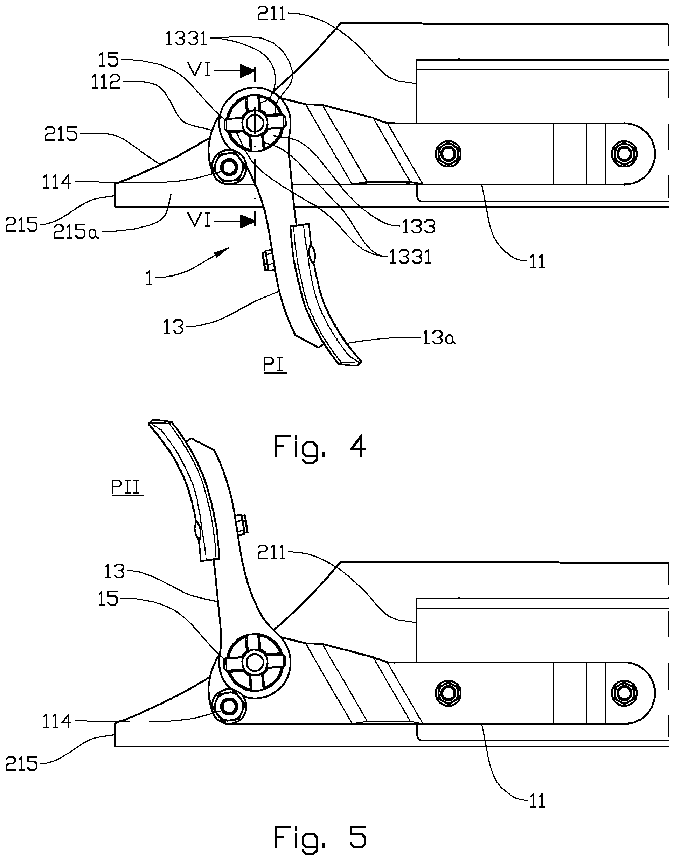

It is now referred to figures 4-6 for further details of an embodiment of the plough sole breaker 1 according to the invention, wherein most of the features are identical to those of the first example. However, in the embodiment shown in figures 4 to 7, some features have been added, providing characteristics which causes this embodiment of the plough sole breaker 1 being suitable even for reversible ploughs.

In this embodiment the tine hub 131 is provided with a stepped through-bore 132 perpendicular to a centre axis of the tine 13. A first bore portion 1321 has a diameter larger than that of a second bore portion 1322, the second bore portion 1322 being arranged to bear smoothly on the shaft 113. The first and second bore portions 1321, 1322 are co-centric. The first bore portion 1321 and the shaft 113 is defining an annulus 138 arranged to accommodate a spring 14, a first spring end 141 being supported by a spring contact face 1323 forming a radially extending transition portion from the larger diameter first bore portion 1321 to the smaller diameter second bore portion 1322. When connecting the tine 13 and the bracket 11, the spring 14 is entered onto the shaft 113, surrounding a portion of the shaft 113 with a second spring end 142 being axially supported by a portion of the bracket 11 from which the shaft 113 is extending.

The end portion 1133 of the shaft 113 is extending from the end portion 1133 of the tine hub 131. An end face 133 of the tine hub 131 is provided with opposing recesses 1331 arranged to receive the locking means 15 inserted in the through bore 1132 of the shaft 113 and extending from at least one end of the through bore 1132, thus securing the tine 13 on the bracket 11. The axial lengths of the spring 14 and the tine hub 131 allow the spring 14 to be tensioned at least when the tine 13 is tilted between a first orientation PI (see figure 4) and a second orientation PII or Plla (see figure 5), by the axial displacement of the tine hub 13 when the recesses 1331 are moved away from meshing with the locking means 14.

In this embodiment the locking means 15 is preferably a tension pin offering accurate positioning of the locking means 15 in the axial direction of the through bore 1132.

The angular positions of the radial through bore 1132 of the shaft 11 and the recesses 1331 of the hub 13 is set according to a prescribed working state position I of the tine 13, the tine 13 preferably slanting in the working direction of the plough 2, e.g. the free end of the tine 13 pointing in the direction of the share 213 of the plough 2.

When arranged in the working state PI according to figure 4, the tine 13 is resting against the support 114.

Even the disclosed embodiment of the plough sole breaker 1 allows the plough to be lowered onto a parking site 3 without the need of tilting the tines 13 from their working state positions PI according to figure 4 to their idle state positions PII according to figure 5 by slightly reversing and simultaneously lowering the plough to the ground, the coordinated shifting of the plough causing the recesses 1331 of the tine hubs131 to be released from engagement with the locking means 15 as the free ends of the tines 13 touches the ground and a forcing the tines 13 to be pivoted about the shafts 113.

For the purpose of ploughing without engaging the plough sole breakers 1, the tines 13 are tilted and locked in their idle state positions PII as shown in figure 5, the locking means 15 re-engaging with the hub recesses 1331, the tines 13 pointing up- and rearwards. In a situation wherein the layout of the plough 2 does not allow the tines 13 to be tilted as shown in figure 5, the tine hub 131 might be provided with a second set of recesses 1331 rotated an angle, i.e. 90 degrees, as shown in figure 4 and 5, thereby allowing the tines 13 to be locked pointing up- and forward.

Figure 7 shows the plough sole breaker according to the embodiment is in a second idle state position PII, tilted further rearwards from the idle position shown in figure 5.

It should be noted that the above-mentioned embodiment illustrates rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A plough sole breaker (1) arranged to be connected to a plough body (21), extendable below a working depth of the plough body (21), the plough sole breaker (1) comprising:
a bracket (11) arranged to be attached to the plough body (21), a forward portion (111) of the bracket (11) comprising attachment means (12);
a tine (13) being connected to a rear end portion (112) of the bracket (11), wherein
the tine (13) is pivotal about a transverse, horizontal axis (137) between a first orientation (PI), where the tine (13) is in an active working state extending downwardly, and a second orientation (PII, Plla), where the tine (13) is in an inactive idle state facing away from the first orientation (PI) wherein a first end portion (134) of the tine (13) is provided with a hub (131) comprising a bore (132) arranged to accommodate a shaft (113) extending transversely from the rear end portion (112) of the bracket (11), a centre axis (1131) of the shaft (113) constituting the pivot axis (137) of the tine (13),
**characterised in that**
the bore (132) is stepped, a first bore portion (1321) facing the bracket (11) having a radial clearance to the shaft (113), and a second bore portion (1322) bearing against a portion of the shaft (113), said first bore portion (1321) and the corresponding encircled portion of the shaft (113) defining an annulus (138) accommodating a compression spring (14), a first end (141) of the compression spring (14) abutting a surface (1323) forming a transition between the bore portions (1321, 1322), and a second end (142) of the spring (14) abutting the bracket (11); and
an end face (133) of the hub (13) opposite the first bore portion (1321) is provided with two radial, diametrically opposite recesses (1331) arranged to rest against a pin (15) extending through a radial through-bore (1131) in an end portion (1133) of the shaft (113), the pin (15) being oriented to engage with the recesses (1331) when the tine (13) is in its first orientation (PI).

2. The plough sole breaker (1) according to claim 1, wherein the tine (13) in its first orientation (PI) is forwardly slanted in the direction from the transverse, horizontal axis (137) towards a second tine end portion (136).

3. The plough sole breaker (1) according to claim 1, wherein a tine support (114) is extending transversely from the rear end portion (112) of the bracket (11), arranged to abut an intermediate portion (135) of the tine (13) when in the first orientation (PI).

4. The plough sole breaker (1) according to claim 3, wherein a top surface (1141) of the tine support (114) is arranged to abut the intermediate portion (135) of the tine (13) when in the second orientation (PII).

5. The plough sole breaker (1) according to claim 3, wherein the tine support (114) comprises side wings (1142) arranged to support opposing sides of the tine (13).

6. The plough sole breaker (1) according to claim 1, wherein a second end portion (136) of the tine (13) is forwardly curved when in its first orientation (PI).

## Patentansprüche

1. Pflugsohlenbrecher (1), der angeordnet ist, um mit einem Pflugkörper (21) ausziehbar unter einer Arbeitstiefe des Pflugkörpers (21) verbunden zu werden, wobei der Pflugsohlenbrecher (1) Folgendes umfasst:
eine Halterung (11), die angeordnet ist, um an dem Pflugkörper (21) befestigt zu werden, wobei ein vorderer Abschnitt (111) der Halterung (11) Befestigungsmittel (12) umfasst;
eine Zinke (13), die mit einem hinteren Endabschnitt (112) der Halterung (11) verbunden ist, wobei
die Zinke (13) um eine horizontale Querachse (137) zwischen einer ersten Ausrichtung (PI), in der sich die Zinke (13) in einem aktiven Arbeitszustand befindet, der sich nach unten erstreckt, und einer zweiten Ausrichtung (PII, Plla), in der sich die Zinke (13) in einem inaktiven Ruhezustand befindet, der von der ersten Ausrichtung (Pl) weg zeigt, schwenkbar ist,
wobei ein erster Endabschnitt (134) der Zinke (13) mit einer Nabe (131) bereitgestellt ist, die eine Bohrung (132) umfasst, die angeordnet ist, um eine Welle (113) aufzunehmen, die sich von dem hinteren Endabschnitt (112) der Halterung (11) quer erstreckt, wobei eine Mittelachse (1131) der Welle (113) die Schwenkachse (137) der Zinke (13) darstellt,
**dadurch gekennzeichnet, dass**
die Bohrung (132) abgestuft ist, ein erster Bohrungsabschnitt (1321), der zu der Halterung (11) zeigt, einen radialen Abstand zur Welle (113) aufweist, und ein zweiter Bohrungsabschnitt (1322) gegen einen Abschnitt der Welle (113) drückt, wobei der erste Bohrungsabschnitt (1321) und der entsprechende eingekreiste Abschnitt der Welle (113) einen Ring (138) definieren, der eine Druckfeder (14) aufnimmt, wobei ein erstes Ende (141) der Druckfeder (14) an einer Fläche (1323) anliegt, die einen Übergang zwischen den Bohrungsabschnitten (1321, 1322) bildet, und ein zweites Ende (142) der Feder (14) an der Halterung (11) anliegt; und
eine Stirnfläche (133) der Nabe (13) gegenüber dem ersten Bohrungsabschnitt (1321) mit zwei radialen, diametral entgegengesetzten Aussparungen (1331) bereitgestellt ist, die so angeordnet sind, dass sie gegen einen Stift (15) ruhen, der sich durch eine radiale Durchgangsbohrung (1131) in einem Endabschnitt (1133) der Welle (113) erstreckt, wobei der Stift (15) so ausgerichtet ist, dass er in die Aussparungen (1331) eingreift, wenn sich die Zinke (13) in ihrer ersten Ausrichtung (PI) befindet.

2. Pflugsohlenbrecher (1) nach Anspruch 1, wobei die Zinke (13) in ihrer ersten Ausrichtung (PI) in der Richtung von der horizontalen Querachse (137) nach vorne zu einem zweiten Zinkenendabschnitt (136) schräggestellt ist.

3. Pflugsohlenbrecher (1) nach Anspruch 1, wobei eine Zinkenstütze (114), die sich von dem hinteren Endabschnitt (112) der Halterung (11) quer erstreckt, so angeordnet ist, dass sie an einem mittleren Abschnitt (135) der Zinke (13) anliegt, wenn sie sich in der ersten Ausrichtung (PI) befindet.

4. Pflugsohlenbrecher (1) nach Anspruch 3, wobei eine obere Fläche (1141) der Zinkenstütze (114) so angeordnet ist, dass sie an dem mittleren Abschnitt (135) der Zinke (13) anliegt, wenn sie sich in der zweiten Ausrichtung (PII) befindet.

5. Pflugsohlenbrecher (1) nach Anspruch 3, wobei die Zinkenstütze (114) Seitenflügel (1142) umfasst, die so angeordnet sind, dass sie gegenüberliegende Seiten der Zinke (13) stützen.

6. Pflugsohlenbrecher (1) nach Anspruch 1, wobei ein zweiter Endabschnitt (136) der Zinke (13) nach vorne gekrümmt ist, wenn sie sich in ihrer ersten Ausrichtung (PI) befindet.

## Revendications

1. Briseur de semelle de labour (1) agencé pour être relié à un corps de charrue (21), extensible au-dessous d'une profondeur de travail du corps de charrue (21), le briseur de semelle de labour (1) comprenant :
un support (11) agencé pour être fixé au corps de charrue (21), une partie avant (111) du support (11) comprenant des moyens de fixation (12) ;
une dent (13) qui est reliée à une partie d'extrémité arrière (112) du support (11), dans lequel
la dent (13) pivote autour d'un axe horizontal transversal (137) entre une première orientation (PI), où la dent (13) est dans un état de travail actif s'étendant vers le bas, et une seconde orientation (PII, Plla), où la dent (13) est dans un état de repos inactif à l'opposé de la première orientation (PI)
dans lequel une première partie d'extrémité (134) de la dent (13) est dotée d'un moyeu (131) comprenant un alésage (132) agencé pour recevoir un arbre (113) s'étendant transversalement à partir de la partie d'extrémité arrière (112) du support (11), un axe central (1131) de l'arbre (113) constituant l'axe de pivotement (137) de la dent (13),
**caractérisé en ce que**
l'alésage (132) est étagé, une première partie d'alésage (1321) faisant face au
support (11) présentant un jeu radial par rapport à l'arbre (113), et
une seconde partie d'alésage (1322) en appui contre une partie de l'arbre (113),
ladite première partie d'alésage (1321) et la partie encerclée correspondante de l'arbre (113) définissant un espace annulaire (138) recevant un ressort de compression (14), une première extrémité (141) du ressort de compression (14) venant en butée contre une surface (1323) formant une transition entre les parties d'alésage (1321, 1322), et une seconde extrémité (142) du ressort (14) venant en butée contre le support (11) ; et
une face d'extrémité (133) du moyeu (13) opposée à la première partie d'alésage (1321) est dotée de deux évidements radiaux diamétralement opposés (1331) agencés pour reposer contre une broche (15) s'étendant à travers un alésage traversant radial (1131) dans une partie d'extrémité (1133) de l'arbre (113), la broche (15) étant orientée pour venir en prise avec les évidements (1331) lorsque la dent (13) est dans sa première orientation (PI).

2. Briseur de semelle de labour (1) selon la revendication 1, dans lequel la dent (13), dans sa première orientation (PI), est inclinée vers l'avant dans la direction allant de l'axe horizontal transversal (137) vers une seconde partie d'extrémité de dent (136).

3. Briseur de semelle de labour (1) selon la revendication 1, dans lequel un support de dent (114) s'étend transversalement à partir de la partie d'extrémité arrière (112) du support (11), agencé pour venir en butée contre une partie intermédiaire (135) de la dent (13) lorsqu'il est dans la première orientation (PI).

4. Briseur de semelle de labour (1) selon la revendication 3, dans lequel une surface supérieure (1141) du support de dent (114) est agencée pour venir en butée contre la partie intermédiaire (135) de la dent (13) lorsqu'elle est dans la seconde orientation (PII).

5. Briseur de semelle de labour (1) selon la revendication 3, dans lequel le support de dent (114) comprend des ailes latérales (1142) agencées pour supporter des côtés opposés de la dent (13).

6. Briseur de semelle de labour (1) selon la revendication 1, dans lequel une seconde partie d'extrémité (136) de la dent (13) est courbée vers l'avant lorsqu'elle est dans sa première orientation (PI).
